# EUROPEAN PATENT SPECIFICATION

(11) **EP 4 022 952 B1**
(45) Date of publication and mention of the grant of the patent: **30.09.2026**
(21) Application number: 20859570.2
(22) Date of filing: 27.08.2020
(51) Int. Cl.: H04L 9/40, H04W 12/06, H04W 12/69, H04M 3/436, H04M 3/42

(54) **CALL AUTHENTICATION AT THE CALL CENTER USING A MOBILE DEVICE**
ANRUFAUTHENTIFIZIERUNG IN DER ANRUFZENTRALE MITTELS EINES MOBILGERÄTS
AUTHENTIFICATION D'APPEL AU NIVEAU DU CENTRE D'APPEL À L'AIDE D'UN DISPOSITIF MOBILE

(30) Priority: 28.08.2019 US 201962893033 P
(43) Date of publication of application: 06.07.2022
(73) Proprietor: Pindrop Security, Inc., Atlanta, GA 30308 (US)
(72) Inventor: GUPTA, Payas, Atlanta, Georgia 30308 (US); NELMS II, Terry, Atlanta, Georgia 30308 (US)
(74) Representative: Murgitroyd & Company
(86) International application number: PCT/US2020/048175
(87) International publication number: WO 2021/041657

(56) References cited:
- WO-A1-2018/236625
- US-A1- 2006 142 012
- US-A1- 2012 166 185
- US-A1- 2014 335 822
- US-A1- 2015 024 712
- US-A1- 2018 082 689
- US-B1- 10 142 464
- US-B1- 10 389 874
- US-B1- 9 762 728
- JIANG ET AL., INTEGRATING INTERNET TELEPHONY SERVICES, June 2002 (2002-06-01), XP002279537, Retrieved from the Internet <URL:http://cs.uccs.edu/~cs525/sip/IEEEInternetComputing02_IPTelephony.pdf> [retrieved on 20201029]

## Description

### CROSS-REFERENCE TO RELATED APPLICATIONS

This application claims priority to U.S. Provisional Application No. 62/893,033, filed August 28, 2019.

This application is a continuation-in-part of U.S. Patent Application No. 16/287,879, entitled "Silent Caller ID Verification Using Callback Request," filed February 27, 2019, which claims priority to U.S. Provisional Application No. 62/640,826, filed March 9, 2018.

This application is related to U.S. Patent Application No. 15/872,639, entitled "Authentication Using DTMF Tones," filed January 16, 2018.

### TECHNICAL FIELD

This application generally relates to systems and methods for authenticating calling devices or callers originating telephone calls to call centers.

### BACKGROUND

As the sophistication of threats that target sensitive data and critical systems grows, the importance of robust security mechanisms becomes even more important. Identity verification is a key requirement to ensure that a request that claims to come from a certain source indeed does come from that source. Caller identification is a service provided by telephone carriers to transmit the phone number and/or the name of a caller to a callee. However, with the convergence of IP (Internet protocol) and telephony, it is easier to spoof caller identification (e.g., caller's number and/or name) without being detected by the callee.

Conventional and existing methods for verifying a user's identification (ID) may be cumbersome and tedious. For example, some conventional methods use knowledge-based questions to authenticate users. A caller trying to access a service, such as a financial institution, by making a phone call may have to answer some questions regarding private information to confirm the caller's identity. Such conventional methods may be insecure, inefficient, cumbersome, and take too much time to verify the identity of the user. In addition, such conventional methods may require the user to perform various actions that result in negative user experience. Some solutions have proposed including a mobile application installed on the mobile device that would exchange information about the user and/or device with the enterprise.

Another complication is that using information received during the telephone call, either through conversation with an agent or through caller interactions with an interactive voice response (IVR) system, is that the telephone communication channel is growing increasingly untrustworthy as techniques for exploiting vulnerabilities, including spoofing information and social engineering, grow more sophisticated. WO 2018/236625 discloses a user authentication verification service. US 2015/024712 discloses a user authentication system using call identification information. US 10,389,874 discloses a method for multiple channel authentication.

### SUMMARY

What is therefore needed is a convenient way to identify and authenticate callers with a mobile application and is less susceptible to spoofing or other exploits present in an inherently untrustworthy telephony channel. It would be beneficial to have a mobile application that aids in authentication processes for authenticating calls to a call center or other enterprise, where the call and certain information about the call is received through a telephony channel, while certain authentication information may be received through a data channel, which can be made more secure than the telephony channel.

Disclosed herein are systems and methods capable of addressing the above described shortcomings and may also provide any number of additional or alternative benefits and advantages. Embodiments described herein provide for systems and methods that authenticate inbound calls to a call center using a mobile application installed on the mobile device of known, trusted, or otherwise registered users. By leaning on the trust built into a data channel used by the mobile application, this system helps transfer the trust built into the data channel to the telephony channel. Certain types of authentication information can be received through the telephony channel, as well. But the mobile application associated with the call center system may provide additional or alternative forms of data through the data channel. The system may send requests to a mobile application of a device to provide information that can reliably be assumed to be coming from that particular device, such as a state of the device or a user's response to push notification.

There are provided a method and a system as per the appended claims. In one embodiment, a computer-implemented method comprises receiving, by a computer via a first communication channel, an indication of an inbound call, the inbound call purportedly originating from a registered caller; transmitting, by the computer, one or more requests to a registered device associated with the registered caller, a first request comprising a message notification configured to display a confirmation element at a graphical user interface of the registered device; and receiving, by the computer via the second communication channel, one or more responses to the one or more requests from the registered device, the one or more responses including a first response to the first request received according to an input to the confirmation element; and executing, by the computer, an authentication routine to authenticate the inbound call using the one or more responses for the one or more requests.

In another embodiment, a system comprises a database configured to store a plurality of data records associated with a plurality of registered users; and a computer comprising a processor. The processor of the computer is configured to receive, via a first communication channel, an indication of an inbound call, the inbound call purportedly originating from a registered caller; transmit one or more requests to a registered device associated with the registered caller, a first request comprising a message notification configured to display a confirmation element at a graphical user interface of the registered device; and receive, via the second communication channel, one or more responses to the one or more requests from the registered device, the one or more responses including a first response to the first request received according to an input to the confirmation element; and execute an authentication routine to authenticate the inbound call using the one or more responses for the one or more requests.

It is to be understood that both the foregoing general description and the following detailed description are exemplary and explanatory and are intended to provide further explanation of the invention as claimed.

### BRIEF DESCRIPTION OF THE DRAWINGS

The present disclosure can be better understood by referring to the following figures. The components in the figures are not necessarily to scale, emphasis instead being placed upon illustrating the principles of the disclosure. In the figures, reference numerals designate corresponding parts throughout the different views.
**FIG. 1** shows components of a system configured for call authentication, according to an embodiment.
**FIG. 2** shows execution steps of a method for authenticating a phone call using multiple communication channels, according to an embodiment.
**FIG. 3** shows execution steps of a method for authenticating a phone call using multiple communication channels, according to an embodiment.
**FIG. 4** shows execution steps of a method in the context of device components, according to an embodiment.
**FIGS. 5A-5B** show notifications displayed at a graphical user interface of a mobile device, according to an embodiment.
**FIGS. 6A-6B** show an enrollment process, according to an embodiment.
**FIGS. 7A-7B** show an enrollment process, according to an embodiment.
**FIGS. 8A-8B** show an enrollment process, according to an embodiment.

### DETAILED DESCRIPTION

Reference will now be made to the illustrative embodiments illustrated in the drawings, and specific language will be used here to describe the same. It will nevertheless be understood that no limitation of the scope of the invention is thereby intended. Alterations and further modifications of the inventive features illustrated here, and additional applications of the principles of the inventions as illustrated here, which would occur to a person skilled in the relevant art and having possession of this disclosure, are to be considered within the scope of the invention.

With the ever-changing topology of the telephony channel (sometimes referred to as a "call channel"), techniques and tools for spoofing telephone calls to call centers or other enterprises grow more numerous and easier to deploy. As a result, the telephony channel is inherently untrustworthy. In addition, it is becoming harder to authenticate callers while maintaining the usability of the system by callers and call center agents.

The system disclosed herein builds on the trust of a data channel for the telephony channel. Certain types of authentication information can be received through the telephony channel, as well. But the mobile application associated with the call center system may provide additional or alternative forms of data through the data channel. The system may send requests to a mobile application of a device to provide information that can reliably be assumed to be coming from that particular device, such as a state of the device and/or a user's response to push notifications. In some cases, the authentication processes may be based on quantity and quality of matches between certain metadata or attributes expected to be received from a given device as compared to the metadata or attributes received.

In addition, system requests for authentication information may be transmitted to a mobile application associated with the call center system and installed on a registered device. Devices that are not executing the mobile application are inhibited or prohibited from adequately communicated with the components of the system. For instance, certain requests for authentication information are sent to the mobile application on a registered device. If an imposter calls from an imposter device purporting to be a registered user, then the authenticating request is still sent to the mobile application of the registered user. The requests sent to the mobile application may include a push notification or text message, which prompts the registered user for a response via a graphical user interface (GUI) to indicate whether that registered user is attempting to access the call center system. An element of the GUI could allow the user to immediately report fraud, which provides convenient and secure protection from spoofing or other forms of social engineering attacks directed to call centers. In some cases, the affirmative or negative response may be all that is needed to authenticate the call, while other cases may require additional types of information. In some cases, the system may generate one or more probabilistic scores, in addition or as an alternative, a sequence of comparative matches between observed information and expected information.

Several aspects of the technology described herein mention that a call center system sends requests for authentication information to a "registered device," where relying upon registration may be preferable in some circumstances. But in some circumstances, it may not be possible or available. The system may execute various forms of fraud analysis processes to generate one or more predictive probabilistic fraud scores. In this way, patterns of previously and recently received information can be used to predict the likelihood that a device that has originated a current call to the call center is the expected or appropriate device. Devices may be enrolled into, registered with, or otherwise identified by the call center system. In some implementations, the user does not even have to explicitly verify or enroll their identity to call center system. This may be accomplished manually, when a user downloads a mobile application. Enrollment, however, may also be accomplished passively or automatically when the system determines that an unenrolled or otherwise unknown device has provided device identification information with sufficient consistency between data entries and over time.

### Illustrative System

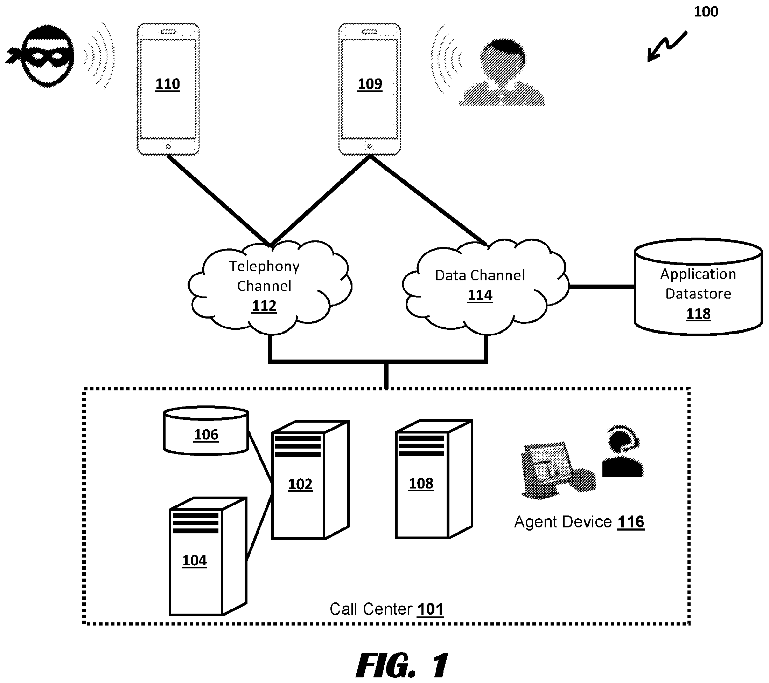

**FIG. 1** shows components of a system **100** configured for call authentication, according to an illustrative embodiment. The illustrative system **100** comprises a call center system **101,** caller devices **109, 110,** and an application datastore **118.** The components of the system **100** may communicate through one or more communication channels **112, 114,** such as a telephony channel **112** or data channel **114,** which may include one or more public and private networks. In operation, callers use the caller devices **109, 110** to place telephone calls to the call center **101.** When an indication of an inbound telephone call is received at the call center system **101,** software-based authentication processes are executed to determine whether the caller device **109, 110** is a registered device **109** with (or otherwise trusted by) the call center **101,** or whether the caller device **109, 110** is an imposter device **110** (or otherwise untrusted by the call center **101**).

It should be appreciated that although one instance of each device is shown in **FIG. 1****,** embodiments are not so limited and may include any number of the various devices. In addition, embodiments may implement the various processes and tasks described herein through additional or fewer devices than what are described herein. For instance, other embodiments may incorporate an authentication server **104** into an enterprise server **102** and still fall within the scope of this disclosure.

The system **100** includes any number of communication channels **112, 114,** such as the telephony channel **112** and the data channel **114,** which host various types of communication exchanges between caller devices **109, 110** and the call center system **101.**

The telephony channel **112** may host device communications that are based on telephony protocols and comprises any number of devices capable of conducting and hosting telephonic communications. Non-limiting examples of components of the telephony channel **112** may include public exchanges (PBX), telephony switches, trunks, integrated services digital network (ISDN), public switch telephone network (PSTN), and the like.

In operation, the call center system **101** may receive inbound calls from caller devices **109, 110** via the telephony channel **112.** Inbound calls may be received at or routed to an enterprise server **102,** an IVR server **108,** an agent device **116,** or other device of the call center system **101** capable of managing inbound calls. In some cases, devices of the call center system **101** may capture certain overhead metadata about the caller device **109, 110** or the inbound call, where such metadata is received via the telephony channel **112.** In addition, the caller may provide information about the caller or the caller device **109, 110,** which is used to, for example, route the inbound call or authenticate the call.

The data channel **114** may host device communications that are based on non-telephony, inter-device commutation protocols, such as TCP/IP, and comprises any number of devices capable of conducting and hosting networked communications. Non-limiting examples of components of the data channel **114** may include routers, network switches, proxy servers, firewalls, and the like.

In operation, the call center system **101** may receive information about the caller device **109, 110** or user inputs via the telephony channel **112.** As shown in **FIG. 1****,** a registered device **109** may communicate with the call center system **101,** while imposter device **110** is unable to because the imposter device **110** is not properly configured. In some cases, this incapability is due to the imposter device **110** not having proper configurations, certain locally installed software, or not having certain credentials. In some embodiments, registered devices **109** execute a software application associated with the call center system **101** that enables the registered device **109** to communicate with the call center system **101** via the data channel **112.**

The call center system **101** may prompt callers or caller devices **109, 110** for certain information. In some cases, the requests for the information are verbally provided to a caller during a discussion with the call center agent. The call center agent may then enter the responses into the agent device **116,** which forwards the responses to the authentication server **104.** In some cases, requests may also be sent to the caller device **109, 110** via the telephony channel **112.** For instance, the IVR server **108** may request the caller to enter or speak certain information. And in some cases, requests may be transmitted to a registered device **109** via a data channel **114.** The authentication server **104** (or other device of the call center system **101**) uses certain information received in the responses in order to perform various processes, such as authentication or registration.

The call center system **101** may request various types of information from the registered device **109** via the data channel **114.** Non-limiting examples may include a request for a state of the registered device **109,** a request for one or more attributes of the registered device **109** or other predetermined types of data, and a request that includes a message notification for the registered user. In some implementations, the message notification may include a push notification that is associated with a mobile application associated with the call center system **101.** The registered device **109** may install and execute a mobile application that enables the registered device **109** to receive and respond to these requests via the data channel **114.** Because imposter device **110** will not have the mobile application, the imposter device **110** may be inhibited from receiving the requests for information or adequately responding to the requests.

As mentioned, some information requests include message notifications sent to the registered device **109.** The message notifications are configured to elicit a user input via a graphical user interface (GUI) presented on the registered device **109.** Like several other types of information requests, the message notifications may be sent to the registered device **109** via the telephony channel **112** or the data channel **114,** while responses are received at the call center system **101** via the data channel **114.** Message notifications may be in the form of push notifications that are associated with a mobile application executing on the registered device **109** and generated according to the operating system and protocols of the registered device **109.** These push notifications are transmitted to the registered device **109** via the data channel **114.** The message notification includes a GUI comprising interface elements that prompt the user to select a response. The selected response is then transmitted to the call center system **101** via the data channel **114.** Additionally or alternatively, message notifications may be in the form of text messages that are generated according to, for example, short message service (SMS) message protocol, multimedia message service (MMS) message protocol, rich communication service (RCS) message protocol, or the like. These text messages may be transmitted to the registered device **109** via the telephony channel **112** according to one or more carrier and device protocols. Text messages may include an interactive link that, when actuated by a user, instructs the operating system of the registered device **109** to invoke the mobile application. The mobile application is then executed, which presents the GUI having the selectable interface elements. As before, the selected response is then transmitted to the call center system **101** via the data channel **114.**

The call center system **101** is a physical and logical network infrastructure that includes various devices for telephony and data communications with caller devices **109, 110** via the communication channels **112, 114.** The component devices of the call center **101** may, for example, receive inbound calls, route the inbound calls to appropriate call center agent devices **116,** and perform various authentication or analytics processes. The devices of the call center system **101** may communicate with one another through one or more public or private networks of the network infrastructure. In the illustrative system **100** of **FIG. 1****,** the call center system **101** comprises the enterprise server **102,** an authentication server **104,** a call center database **106,** the IVR server **108,** and the agent computing device **116.**

It should be appreciated that components of the call center system **101** are described as separate components for ease and clarity. Embodiments may aggregate or parse the operations of the components described into fewer or more components. For example, the enterprise server **102** may be described as a distinct component from the authentication server **104** in **FIG. 1****,** but other embodiments may partially or entirely incorporate the features of the enterprise server **102** into the authentication server **104.**

The enterprise server **102** may receive call data and manage data flow for inbound calls received at the call center system **101** and for data communication with mobile applications installed on registered caller devices **109.** The enterprise server **102** may be any number of computing devices comprising a processor, device hardware, and machine-readable software and capable of performing the various processes and tasks described herein. Non-limiting examples of the enterprise server **102** may include a server computer, a desktop computer, a laptop computer, a tablet computer, and the like.

The enterprise server **102** may be situated as a logical central hub for components of the call center system **101.** For example, an inbound call received via a telephony channel **112** may be received by the enterprise server **102** and routed to the IVR server **108** or an agent device **116.** As another example, the enterprise server **102** could execute various software applications that monitor one or more "legs" of the call lifecycle. In this example, the enterprise server **102** could trigger or otherwise invoke the authentication server **104** to authenticate the legitimacy of the inbound call and/or authenticate the caller based on information from the caller device **109, 110.** As another example, software on a monitoring device of the call center system **101** (e.g., firewall, router, switch, computing device, server) could be configured to detect an inbound call before or after the inbound call is routed to the IVR server **108** or agent device **116.** In this example, the monitoring device then initiates a request to the enterprise server **102** to authenticate the inbound call, caller, or calling device **109, 110.** The enterprise server **102** may receive and forward the authentication request to the authentication server **104.** As noted, it should be appreciated that in other embodiments the enterprise server **102** and the authentication server **104** could be combined into a single server.

The enterprise server **102** may receive and manage communications with mobile applications of registered caller devices **109** via the data channel **114.** For example, information exchanges between the mobile application of the registered device **109** and the authentication server **104** may traverse the various communications networks according to instructions from the enterprise server **102.** The enterprise server **102** may detect or trigger processes, such as an authentication or registration process executed by the authentication server **104.** In some implementations, the enterprise server **102** may also manage registration operations for new mobile application installations for new registered devices **109** of the system. In such implementations, the enterprise server **102** may receive certain types of data associated with a registered device **109,** and store this data for later use when authenticating calls purportedly originating from the registered device **109.**

The authentication server **104** may receive various types of call data of an inbound telephone call for authenticating telephone calls and execution instructions from other devices of the call center system **101** (e.g., enterprise server **102,** IVR server **108,** agent device **116**). The authentication server **104** executes various processes for registering and authenticating inbound phone calls received from caller devices **109, 110.** It should be appreciated that the authentication server **104** may be any number of computing devices comprising a processor, device hardware, and machine-readable software and capable of performing the various processes and tasks described herein. Non-limiting examples of the authentication server **104** may include a server computer, a desktop computer, a laptop computer, a tablet computer, and the like.

The authentication server **104** executes machine-readable software instructions for executing authentication routines and registration routines. In operation, the authentication server **104** receives information about caller devices **109, 110** from various data sources of the system **100,** such as the enterprise server **102,** call center database **106,** IVR server **108,** agent device **116,** and caller devices **109, 110.** The authentication server **104** receives caller identifier information, determines a device identifier associated with the caller identifier, and requests information from the registered device **109** identified by the device identifier. The authentication server **104** then determines whether the data of the responses received via the data channel **114** match expected data values, which may be pre-stored values or dynamically determined by the authentication server **104** during the call.

Caller identification information includes various types of data values that identify a caller or can be used as part of the identity of the caller. In some cases, caller identification data expressly identify the caller (e.g., name, username, caller identifier) or an aspect of the caller identity (e.g., email address, location); or the caller identification information may include data that can be used to derive or determine the identity of the caller (e.g., passphrase, pin). Non-limiting examples of types of caller identification data may include a name, authentication credentials (e.g., username, password, passphrase, pin), biometric data, account number, account identifier, email address, cryptographic tokens (e.g., encryption keys, encryption certificate, hashed key), social security number, physical address, date of birth, and phone number, among other types of information that can be used to identify a user/caller who is registered with the call center system **101** and who has purportedly originated an inbound telephone call.

Device identification information includes various types of data values that identify registered device **109** or can be used as part of the identity of the registered device **109.** In some cases, device identification data expressly identify the registered device **109** (e.g., device identifier, computer name, MAC address) or an aspect of the registered device **109** (e.g., IP address, Automatic Number Identification (ANI)); or the device identification information may include data that can be used to derive or determine the identity of the registered device **109.** Non-limiting examples of types of device identification data may include a device identifier, a MAC address, an IP address, a system-generated universally unique device identifier (UUID), an identifier for advertising (IDFA), and a Google advertising identifier (AAID), among other types of information that can be used to identify the registered device 109 that has purportedly originated an inbound telephone call.

Continuing with the authentication server **104,** in some implementations the authentication server **104** sends query to the caller device **109, 110** to confirm whether the caller device **109, 110** has a certain mobile application associated with the call center system **101.** The authentication server **104** may, for example, transmit a request message to the caller device **109, 110** that the mobile application detects and transmits a brief response accordingly. If the caller device **109, 110** does not have the mobile application, then the authentication server **104** takes a certain remedial action, such as halting or rejecting the inbound call, routing the inbound call to a call center agent, invoking an alternative authentication process, or executing a registration routine. Additionally or alternatively, the enterprise server **102** may query a listing or data records of registered devices **109** having the mobile application associated with the call center system **101** to determine whether the caller device **109, 110** has the mobile application of the call center system **101.**

The call center database **106** may store various data records associated with registered devices **109.** The call center database **106** may be updated by the authentication server **104** or other devices to enroll new registered devices **109** or queried by the authentication server or other device when executing various authentication processes. The call center database **106** may be hosted on any number of computing devices comprising a processor, device hardware, and machine-readable software and capable of performing the various processes and tasks described herein.

The database records in the call center database **106** include various types of data about registered callers and registered devices, such as caller identification information and device identification information. The data records for a registered caller may indicate other information employed by the system **100** for authentication processes, such as preferred mechanisms for communication (e.g., email, text message) and ways to contact registered device **110** when transmitting requests for certain information.

The IVR server **108** is a computing device that manages the data flow for inbound calls that navigate an IVR application, which in the illustrative system **100** is executed by the IVR server **108.** It should be appreciated that the IVR server **108** may be any number of computing devices comprising a processor, device hardware, and machine-readable software and capable of performing the various processes and tasks described herein. Non-limiting examples of the IVR server **108** may include a server computer, a desktop computer, a laptop computer, a tablet computer, and the like.

In operation, when the caller initiates a call to the call center system **101,** the inbound call traverses over the telephony channel **112** and is routed to the IVR server **108.** The IVR server **108** can determine how to route the inbound call, such as determining which call center agent should handle the content of the call. In some cases, the IVR server **108** can capture and forward certain information that can be employed for authentication purposes. For example, the IVR server **108** may prompt the caller to input certain caller identification information, which may indicate who the caller purports to be.

It should be noted that in some embodiments, the system **100** does not include an IVR server **108.** Rather, inbound calls may be routed directly to an agent device **116.** Similarly, even for embodiments comprising an IVR server **108,** in some circumstances the nature or content of the inbound call may forgo the IVR server **108** and the inbound call may be routed directly to an agent device **116.**

The agent device **116** is a computing device operated by an agent of the call center system **101** to handle inbound calls. The agent device **116** may include a GUI configured to display information gathered by the IVR server **108** (or any other devices) that routed the inbound call from the telephony channel **112** to the agent device **116.** This information may include data fetched from the database **106,** data entered by the caller during an IVR application, or data extracted from the overhead metadata of the telephony channel **112.** Additionally or alternatively, the GUI may display information fetched by the agent device **116** from the database **106** or entered by the agent. In some cases, the agent device **116** may be used to manually initiate an authentication request, which the agent device **116** transmits, along with various types of information, to an authentication server **104** or enterprise server **102.**

An agent device **116** may be any computing device comprising a processor, device hardware, and machine-readable software and capable of performing the various processes and tasks described herein. Non-limiting examples of the agent device **116** may include a server computer, a desktop computer, a laptop computer, a tablet computer, and the like.

The application datastore **118** may be a data service from which caller devices **109, 110** may download and install a mobile application associated with the call center system **101.** In some cases, the datastore **118** may be hosted by public data service, such as Apple App Store^{®} or Google Play^{®}. And in some embodiments, the datastore **118** is a private data service hosted on a privately available application server. In operation, caller devices **109, 110** may navigate to, for example, a web-based address for the datastore **118** from which caller devices **109, 110** may download the mobile application.

Caller devices **109, 110** can be any electronic device comprising a processor and software, and capable of performing the various tasks and processes described herein, which includes the capability of communicating with a call center system **101** via a telephony channel **112** and via a data channel **114.** A caller device **109, 110** could be, for example, a cellular phone (sometimes called a "smartphone" or "mobile phone"), a tablet device, a laptop computer, or any other computing device. It should also be appreciated that in some instances, the telephony channel includes voice-over-IP (VoIP) communications as initiated and executed by the caller device **109, 110.** It should be appreciated that embodiments are not necessarily limited to mobile applications or mobile electronic devices, but may rather include fixed devices (e.g., laptop computer, desktop computers), telephones (e.g., unified communications phones, application and VoIP-enabled telephones), or telephony software (e.g., softphone) executed on a fixed device.

### Authentication

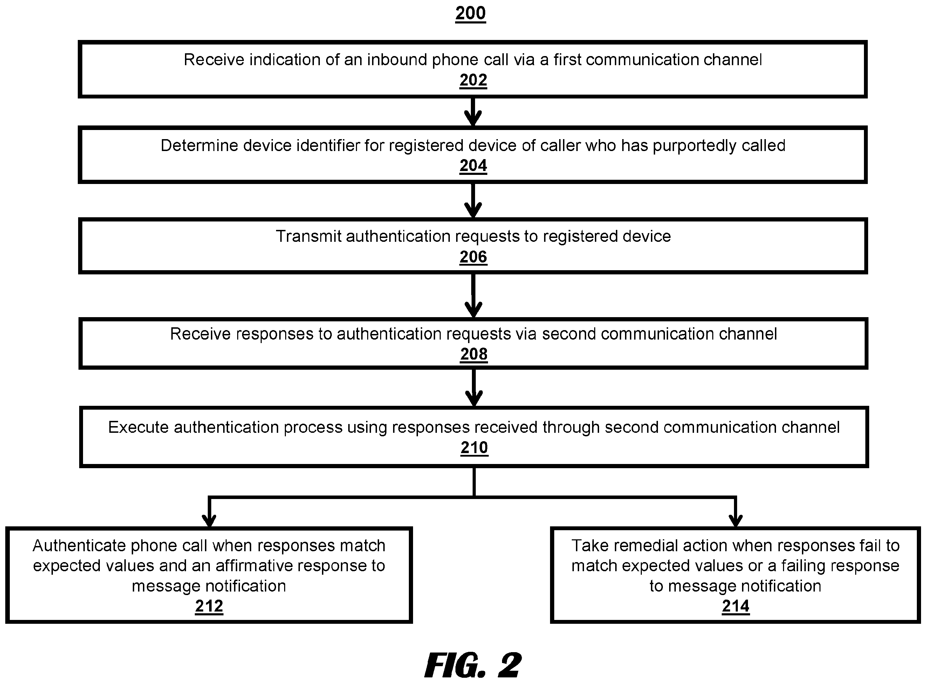

**FIG. 2** shows execution steps of an illustrative method **200** for authenticating a phone call using multiple communication channels, according to an embodiment. In the illustrative method **200,** a caller places a telephone call to a call center system that executes various processes to authenticate the telephone call. The call center system includes one or more databases containing database records with information about users or devices registered with the call center system. The caller of an inbound call provides information that indicates the caller purports to be a registered user.

It should be appreciated that additional or alternative devices may be implemented to execute the various steps of the illustrative method **200.** In addition, the illustrative method **200** is described as using two communication channels, though other embodiments may implement more. It should be further appreciated that other embodiments may include additional or alternative steps, or omit certain steps, from those shown in **FIG. 2** and still fall within the scope of this disclosure. Although the steps of the method **200** are described as being executed by the authentication server, is should be appreciated that additional or alternative computing devices may be involved in executing the various steps.

In step **202,** an authentication server of a call center receives an indicator of an inbound phone call received at the call center through a first communication channel, such as a telephony channel. The indicator may be an event or data that triggers the server to execute various authentication processes, which are based upon responses received from caller devices through a second communication channel. The indicator can include information (e.g., name, address, account number, caller identifier) about the caller or the caller device that the authentication server references for later steps of the method **200.**

In some embodiments, the call indicator may be a user input, entered by the caller, call center agent call center, or another end-user. The caller, purporting to be a registered user of the call center system, could enter or provide information about the caller, caller device, or registered user. The caller can provide such identifying information to an IVR server or call center agent, via the telephony channel, through spoken interactions or keypresses at the caller device. The IVR server or call center agent may invoke the authentication server to execute various authentication processes using the information provided by the caller.

The call center system receives a caller identifier with the call indicator. The authentication server may use the caller identifier to later determine a device identifier, as in step **204.** In some cases, the caller identifier may be received at the IVR server based on caller inputs responding to IVR prompts. For instance, the caller identifier may be a user name, account number, or other identifying data that the caller enters in response to IVR prompts. The IVR server may then forward that information to the authentication server. In some cases, the caller identifier may be received as a function of the telecommunications systems, carriers, and protocols. For example, a caller identifier may be the Caller ID metadata, the ANI, or any other type of telecommunications overhead metadata. And in some cases, the caller identifier may be entered by a call center agent. As mentioned, the call center agent may receive the inbound call directly or through an IVR system and enter the caller identifier data into a GUI according to the verbal information conveyed by the caller. At some point in the conversation, the call center agent may manually submit the ongoing call to the authentication server and instructions to execute the authentication processes.

The caller identifier may be explicit in the call indicator (or other data received by the call center system) or the authentication server must determine the caller identifier using the information received by the call center system. For example, the information received from the caller through the telephony channel may be an encrypted, hashed, or other type of encoded version of the caller identifier. The authentication server may apply the appropriate algorithms to derive the caller identifier from the information provided. As another example, the information received may include a database value that maps to database of record of the registered user containing the caller identifier. For instance, the information received via the telephony channel may include a password, passphrase or passphrases, pin, or hash of predetermined information, which the authentication server uses to query the database for the caller identifier.

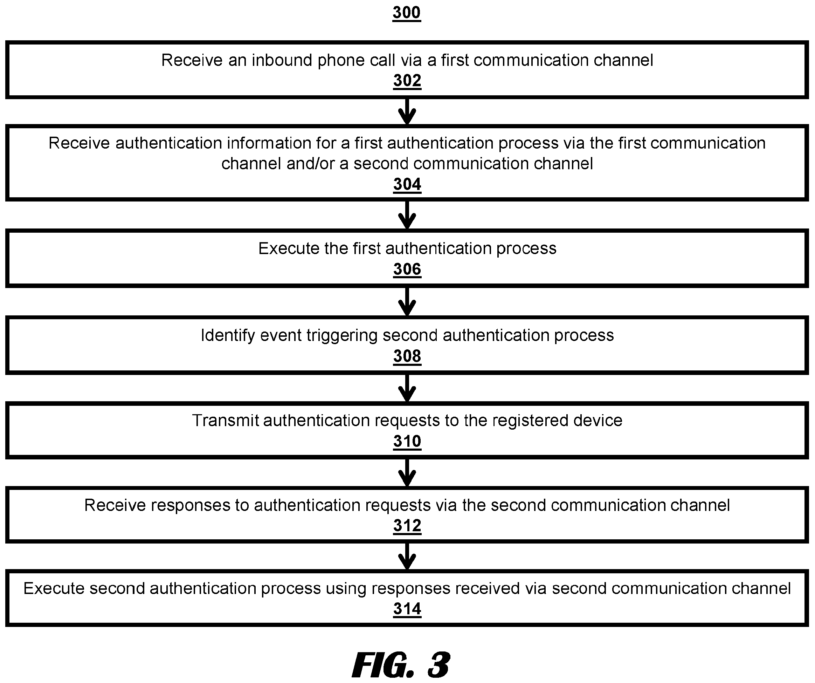

In some embodiments, such as the illustrative method **300** of **FIG. 3****,** the call center system employs multi authentication processes. For instance, the call center system may implement an optional precursor authentication process prior to the method **200** of **FIG. 2****.** With respect to step **202,** a successful authentication of the inbound call during a preceding authentication process may effectively serve as a call indicator that triggers the following steps of the method **200** of **FIG. 2****.**

In step **204,** based on the caller identifier, the authentication server identifies a device identifier for a registered device associated with the registered user. A database record, such as a database record for the registered user, can include a device identifier that identifies a device registered to, or otherwise previously associated with, the registered user. When the authentication server identifies the caller identifier for the registered user, as in step **202,** the authentication server then identifies or otherwise determines the device identifier associated with that registered user.

In step **206,** the authentication server transmits one or more authentication requests to the registered device according to the device identifier. The authentication requests, transmitted by the authentication server, may be requests for certain types of information about the registered device. Non-limiting examples may include requests for the state of the device, requests for certain attributes about the device, or a message notification configured for human interaction through a GUI of the registered device. For instance, during an enrollment process, the authentication server may receive or generate certain types of data associated with the registered device (e.g., MAC address, UUID) or the registered user (e.g., user credentials), which are then stored as attributes of the device into the database.

The authentication requests may be transmitted through a telephony channel or through a data channel. As mentioned, a message notification may include an app-based push notification configured to be displayed by a mobile application installed on the registered device. Such push notifications are transmitted through a data channel. When the registered user clicks the push notification or otherwise executes the mobile application, the mobile application presents a GUI comprising one or more GUI elements prompting the registered user to input whether the registered user is involved with the current inbound call. Additionally or alternatively, the message notification may be an SMS or MMS (collectively, "text message") that the authentication server or other device of the call center system transmits via a telephony channel. The text message may include a clickable link instructing the mobile device to invoke the locally-executed mobile app. When the registered user clicks the link, the mobile application is executed and a GUI is presented with a GUI element, which could be a confirmation element, allowing the registered user to input and confirm whether the registered user is involved with the current inbound call.

The authentication requests may further include requests for certain information about the registered device, such as the device state or other predetermined types of data that were captured or generated during an enrollment process for the registered device. During authentication, the mobile application may gather the corresponding information by, for example, querying the local storage or software program logically situated on top of the operating system of the registered device (e.g., middleware capable of retrieving information from the operating system on behalf of the mobile application). For example, the local storage may contain a UUID assigned to the mobile application during registration and the operating system or other firmware component of the registered device may indicate (for the mobile application) the state of the caller device during the call.

In step **208,** the authentication server receives, from the registered device, responses to each of the authentication requests via the second communication channel (e.g., a data channel). As mentioned, the registered device executes a mobile application associated with the call center system. The mobile application may, for example, gather certain information according to the requests from the local storage or operating system of the registered device and receive a user input via a GUI, and then transmit the responses to the authentication server via the second channel.

In step **210,** the authentication server executes a software-based authentication routine that uses the responses received from the registered device in order to authenticate the inbound call. The responses may include responses to the message notification, responses to the state requests, and responses to the attribute requests. The authentication server may compare the response information against the expected information to determine whether the information matches. If the information fails to match, then the authentication fails.

The authentication server may determine there is a match according to one or more algorithmic operations. In some embodiments, a match is identified based upon straightforward comparisons of the data in the responses against the expected data values. In such embodiments, the amount of matching data may vary. For example, the authentication server may implement a strict threshold requiring that each of the compared data values match or that certain critical data values match. As another example, the authentication server may implement a less-stringent threshold that requires some threshold number of matches, thereby allowing for some number of mismatches or variations.

In some embodiments, a match is based upon heuristic or threshold scoring rules. In such embodiments, a score may be assigned to certain identified matches based upon the criticality of the data field and/or based upon the precision of the match. The scores maybe may combined according to one or more mathematical operations into a matching score. If the matching score satisfies a threshold, then the authentication server has determined the values in the response match the expected values.

In some embodiments, the authentication server may apply one or more machine-learning algorithms for determining whether the data in the responses matches expected data. In such embodiments, the data values received from the registered device may be employed for training a machine-learning model or for various operation related to developing the model. Models may be generated and trained for each particular registered caller and/or for categories of callers, using supervised or unsupervised machine-learning algorithms. As an example, feature vectors for each of the registered users can be generated from the data records of registered users, which, in some cases, could include a label indicating that the feature vector is associated with the registered user. The models can be trained against one or more feature vectors of one or more registered users according to the particular types of data being modeled. For instance, certain personalized user identifying information (e.g., social security number, UUID) can be used to generate and/or train models for a particular registered user; and certain categorical user identifying information (e.g., carrier, country location) can be used to generate and/or train models for a collection of registered users. A feature vector can likewise be extracted from the data values received from the inbound call associated with the caller. The one or more trained models can be applied to the feature vector extracted for the caller to generate a score. If the score satisfies a threshold, then the caller is determined to be the registered user. Additionally or alternatively, the authentication server may apply clustering techniques to certain data values of the registered user to identify the types of data critical to the authentication when generating/updating the feature vector for the registered user to train the model for the registered user. Clustering may also be implemented, additionally or alternatively, to determine an authentication score by determining whether the distance from clustered data values or feature vector extracted for the registered user satisfies a threshold from the data values or feature vector extracted for the caller.

It should be appreciated that these examples of authentication based upon the data of the registered user and the caller are merely illustrative and non-limiting. Variations or well-known algorithmic approaches for authentication using such data may be within the scope of this disclosure.

The response to the message notification is a user input that indicates whether the registered user is actually the caller who initiated the inbound call. If the user input indicates that the registered user did not initiate the call, then the authentication fails.

In optional step **212,** the authentication server authenticates the inbound phone call when responses match expected values and include an affirmative response to message notification. The authentication server may route the call according to the context in which the method **200** was invoked. For example, the authentication routine may be invoked prior to routing the call to an IVR server or agent. In this example, upon successful authentication, the call is routed by the authentication server or other device of the system to the IVR server or agent. In another example, the authentication routine may be invoked by an instruction inputted at an agent device. In this example, the upon successful authentication, a successful authentication notification may be provided to the GUI of the agent device or the inbound call may be reinitiated and routed back to the agent device.

In optional step **214,** the authentication server may take remedial action when the responses either fail to match expected values or a negative response to message notification is received. The remedial action may include dropping the call, rejecting the call from further routing, routing the call to an agent or fraud analyst, re-attempting the authentication routine using the same or different attributes, or attempting a different technique for authenticating the call.

**FIG. 3** shows execution steps of an illustrative method **300** for authenticating a phone call using multiple communication channels, according to an embodiment. In the illustrative method **300,** a caller places a telephone call to a call center system that performs multiple authentication processes in order to authenticate the telephone call. The inbound call is then authenticated using multiple iterations of call authentication processes. In the second authentication process, responses are received via the data channel and include a response to a message notification displayed at the client-side GUI.

It should be appreciated that additional or alternative devices may be implemented to execute the various steps of the illustrative method **300.** In addition, the illustrative method **300** is described as using two communication channels, though other embodiments may implement more. It should be further appreciated that other embodiments may include additional or alternative steps, or omit certain steps, from those shown in **FIG. 3** and still fall within the scope of this disclosure.

In step **302,** the call center system receives an inbound phone call via a telephony communication channel. The call may be routed from the telephony channel to an IVR system or agent device. At a predetermined triggering event, such as when the inbound call is received, the caller may be prompted, through the telephony channel, to provide certain authentication information for a first authentication process. Additionally or alternatively, a state of the device may be queried by an authentication server.

In step **304,** an authentication server receives the response information for the first authentication process. These responses may be received via the telephony channel or via a data channel. These responses may include user credentials or simplified caller identification information. In some case, these responses further include the current device state.

In step **306,** the authentication server executes a first authentication routine using the state of the device and the caller identification information received in the first set of responses. The authentication server may compare the information received in the first set of responses against pre-stored or expected information, then the authentication server authenticates the phone call for a first level. If the call fails the first authentication process, the authentication server may invoke one or more remedial processes and prevents the call from proceeding.

In step **308,** the authentication server (or other device of the call center system) identifies an event triggering a second authentication process. A triggering event may include, for example, a caller's attempt to access sensitive data, a caller's attempt to perform a sensitive process, or at a predetermined timing interval after the first authentication process.

In step **310,** the authentication server transmits requests for authentication information to the registered device. These requests may be transmitted through the telephony channel or the data channel, and may include requests for the same or different authentication information. In addition, the second round authentication process includes a request comprising a message notification configured to be displayed at a GUI of the registered device and to receive a user input indicating the response.

In some implementations, the information received for the first authentication process may be employed for preparing the requests of the second authentication process. For example, credentials used to authenticate call for the first authentication process may include caller identification information, which the authentication server uses to fetch the device identification information or other data related the registered caller.

In step **312,** the authentication server receives the second set of responses to the second round of requests via the data channel. As mentioned, the registered device executes a mobile application associated with the call center system. The mobile application may, for example, gather certain information according to the requests from the local storage or operating system of the registered device and receive a user input via a GUI, and then transmit the responses to the authentication server via the second channel.

In step **314,** the authentication server executes the second authentication routine using the responses received via a data channel. The responses may include responses to the message notification, responses to a second state request, and responses to requests requiring the same or different attributes. The authentication server may compare the second set of response information against expected information to determine whether the second round of information matches. If the information fails to match, then the second authentication routine fails.

A response to the message notification is a user input that indicates whether the registered user is actually the caller who initiated the inbound call. If the user input indicates that the registered user did not initiate the call, then the authentication fails.

If the authentication server authenticates the inbound phone call in the second authentication process, when responses match expected values and include an affirmative response to message notification, then the authentication server may route the call according to the context in which the method **300** was invoked.

If the authentication server determines that the authentication fails, when the information in the second set of responses either fail to match expected values or a negative response to message notification is received, then authentication server may take remedial action. The remedial action may include, for example, dropping the call, rejecting the call from further routing, routing the call to an agent or fraud analyst, re-attempting the authentication routine using the same or different attributes, or attempting a different technique for authenticating the call.

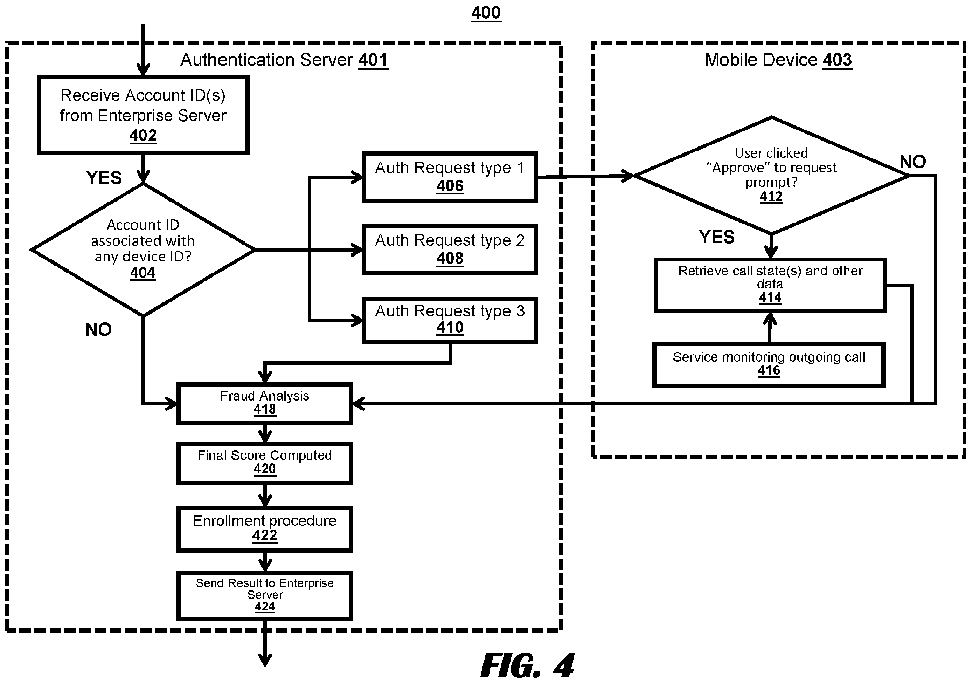

**FIG. 4** shows execution steps of an illustrative method **400** in the context of device components, according to an embodiment. **FIG. 4** shows that certain execution steps are executed by an authentication server **401** of a call center system, while other executed steps are executed by a mobile device **403** (sometimes referred to as a "caller device").

In the illustrative method **400,** a user initiates a call from a mobile device **403.** The call reaches the carrier of the mobile device **403** and then transferred to the carrier of a call center enterprise. In some circumstances, the carriers may be the same; and in some circumstances, there may be one or more carriers involved with the call. The call may be received at an enterprise server, which may be configured to initiate an authentication request for an authentication server **401** to authenticate the call before the call is answered at an IVR server. Although the illustrative method 400 mentions that authentication is initiated before the call is answered at the IVR server, it should be appreciated that this is not limiting on other embodiments. The authentication, among other operations, may be initiated or otherwise occur before or when the call is being handled at the IVR server. For instance, in some circumstances the programmatic hooks for the IVR server to execute various processes are not present before the call arrives at the IVR server. In such circumstances, the authentication might not be initiated before the call is answered at the IVR server, but rather when the IVR server has received and is handling the call. These cases nevertheless fall within the scope of this disclosure.

In step **402,** an inbound telephone call arrives at the authentication server **401** from an enterprise server. The enterprise server may extract certain information about the call, which is sent to the authentication server **401** with the authentication request. For example, the ANI and other metadata may be extracted from the incoming call and is sent to the authentication server **401.** Additionally or alternatively, the authentication server **401** receives an account identifier (account ID) along with the authentication request for the call. In some cases, the authentication server **401** uses the ANI as the account ID.

In step **404,** the authentication server determines whether the account ID is associated with a particular device identifier (device ID) in a database. The authentication server **401** may use the ANI (or another type of data) as an account ID to check if there are any device identifier(s) in the database.

In some implementations, the authentication server **401** retrieves one or more device ID associated with that account ID and may use the device ID to sends queries to a mobile application of the mobile device **403** to check the call states of the mobile device **403.** Additionally or alternatively, the authentication server may extract other stored metadata, such as a device timestamp, timezone, device ID, location, WIFI, Bluetooth, International Mobile Equipment Identity (IMEI), network or carrier information, and security information (lock/unlock feature bits indicating whether the device is locked or unlocked), among other types of data. This information may be transmitted to a fraud analysis program, which is described with respect to steps **418-420.**

Referring back to step **404,** the authentication server may determine one or more type of authentication functions to be employed. In some implementations, the database record for the account ID or the enterprise server may establish a default policy for a certain authentication function, which the authentication server **401** can consider when determining the type of authentication function to implement. As shown in **FIG. 4****,** there are three potential authentication functions to be executed, which may be selected based on various factors, such as the capabilities of the mobile device **403,** recent communications or authentication attempts between the authentication server **401** and mobile device **403,** or a predetermined policy for the registered user. A first authentication (type 1) function and second authentication (type 2) function transmits a message notification to the mobile device **403,** prompting user interaction via a GUI of the mobile device **403.** A third authentication (type 3) function determines whether the mobile application of the mobile device **403** has recently transmitted authenticating data to the authentication server **401.**

In optional step **406,** the authentication server **401** initiates a type 1 authentication function, in which the authentication server **401** transmits a message notification prompting a user interaction via a GUI display of the mobile device **403.** In step **412,** the mobile application determines whether the user clicked "approve" to the request prompt. It should be appreciated that embodiments are not limited to those indicating "approve" on the GUI but may further include any GUI element capable allowing the user to select and enter an affirmative response to the prompt displayed via the GUI. In step **414,** the mobile application gathers call state or device state data, and other attribute data about the mobile device **403.** As shown in step **416,** the mobile application comprises an executable service that monitors outgoing calls. The call monitoring server continuously or periodically captures the call state or device state data, as well as other attribute data. This captured data may be stored for later transmission to the authentication server **401** in step **414.**

In optional step **408,** the authentication server **401** initiates a type 2 authentication function, in which the authentication server **401** transmits a message notification prompting a user interaction via a GUI display of the mobile device **403.** In a type 2 authentication function, there is no affirmative response available for the user to select; only an option to report fraud to the authentication server **401** or other device of the call center system. As such, the authentication server **401** is not awaiting a response from the mobile device **403** before proceeding with the authentication processes.

In optional step **410,** the authentication server **401** initiates a type 3 authentication function, in which the authentication server **401** determines whether there is recently received authentication information that is stored in a memory or cache of the authentication server **401** or other device of the call center system. Authentication information may be stored in a database or other memory and each data entry comprise or be assigned a timestamp. If recent authentication information was received within a time threshold, then the authentication server **401** may use such data for authentication purposes in later steps of the method **400.**

In step **418,** the authentication server **401** uses the various types of authentication information received as responses or otherwise available to the authentication server **401** to execute a programmatic fraud analysis process. The fraud analysis process references the current authentication information to execute one or more algorithms that generate a predictive authentication score for the call. In some implementations, fraud analysis process further retrieves and uses historical data, which may include type 3 data or other data received from the mobile device **403.** Is should be appreciated that, in various embodiments, the risk score may also be computed using historical data and/or previously determined reputation information received from a reputational database, which stores data records containing reputation data indicating the riskiness of the caller according to the identifying information of the caller. Additionally or alternatively, a risk analysis engine may generate a risk score the call based upon the historical data, metadata, and/or reputation data generated, received, or extracted from the various data sources. The authentication server **401** may generate an authentication score based upon the data obtained from prior step **404** (e.g., device states, device metadata); and may further generate a risk score using the data obtained from the mobile application of the mobile device **403** and the historical data. In step **420,** the authentication server **401** uses the risk score and the authentication score to generate a final score.

In optional step **422,** the authentication server may execute an enrollment procedure after executing the authentication processes. When a caller has been authenticated, the authentication server or enterprise server may enroll the user passively, so that for future calls the user can be authenticated passively without user interaction. After the user has been authenticated, the authentication server references the call states of the call or the mobile device **403** previously or make another request to the mobile device **403** to retrieve the call state. The authentication server **401** may compare the received call state against the expected call state, as determined by the authentication server **401** or received from the enterprise server or other device of the call center system. In some implementations, the authentication server **401** may check for state transition with the enterprise server. For example, the enterprise server may put the user on hold (e.g., "hold" call state) and instruct the authentication server to query the state of the mobile device **403** to determine whether the mobile device **403** was on hold (e.g., "hold" device state). The enterprise server may later remove the user from hold (e.g., "active" call state) and instruct the authentication server **401** to query whether the state of the device changed accordingly. If there is a strong correlation, then the user and the device may be enrolled. Non-limiting examples of call authentication using call states can be found in U.S. Patent Application No. 16/287,879, entitled "Silent Caller ID Verification Using Callback Request," filed February 27, 2019, which claims priority to U.S. Provisional Application No. 62/640,826, filed March 9, 2018, each of which is incorporated by reference in its entirety.

In step **424,** the authentication score or a result derived from the authentication score is transmitted to the enterprise server or other device of the system. The enterprise server or the authentication server may then approve or deny authentication for the current inbound call based on whether the final score and/or the information obtained from the authentication server **401** satisfies a threshold score value, amount of information, or another threshold metric.

With reference to step **404,** in some embodiments, the authentication server or enterprise server is configured to disallow authentication where no device ID is found in the database. If the authentication server cannot retrieve the device ID against the queried account ID sent by the enterprise server, then the authentication server **401** concludes the caller device is not enrolled and registered. The authentication server can generate and respond to the enterprise server with a risk score that will fail an authentication threshold.

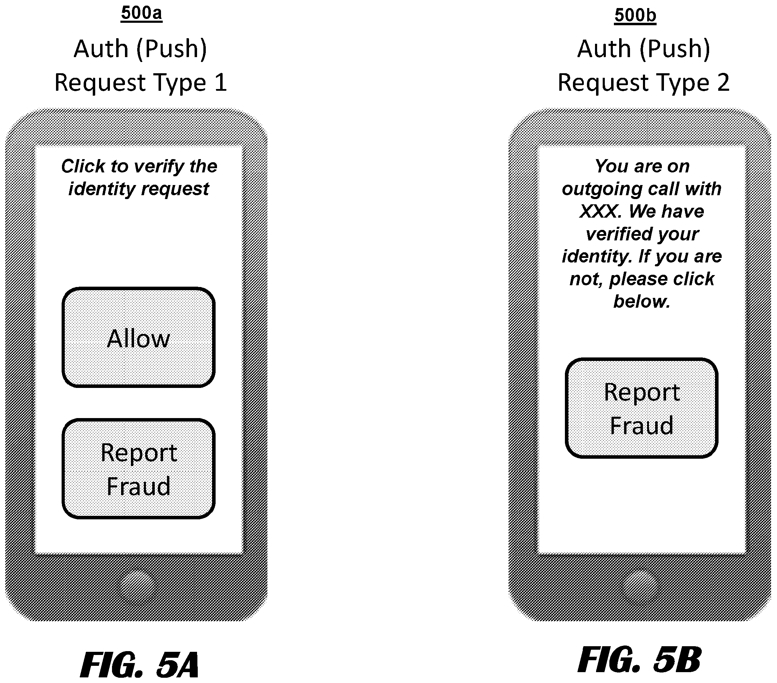

FIG. 5A shows an illustrative message notification 500a displayed at a GUI of a mobile device. The message notification 500a includes a GUI having two user interface elements. A first GUI button to indicate an affirmative authentication response from user, thereby indicating the authentication request should proceed, and a second GUI button to, for example, report fraud or otherwise indicate a negative authentication response. Each of these buttons transmits a response to authentication server, which the authentication server uses when determining whether to authenticate a call made to a call center system.

**FIG. 5B** shows an illustrative message notification **500b** displayed at a GUI of a mobile device. The message notification **500a** includes a GUI having one user interface element: a GUI button to allow the user to indicate report fraud or otherwise indicate a negative authentication response. If the user actuates the report fraud button, the mobile devices transmits a response to authentication server, which the authentication server uses when determining whether to authenticate a call made to a call center system. The report fraud button may automatically or by weighted value for scoring deny authentication of the call and trigger the authentication server or enterprise server to execute various remedial process. If the user does not enter a response, because the user does not object to the content of the message notification **500b,** then the server may automatically determine an approval was received from the user after a threshold amount of time.

### Enrollment

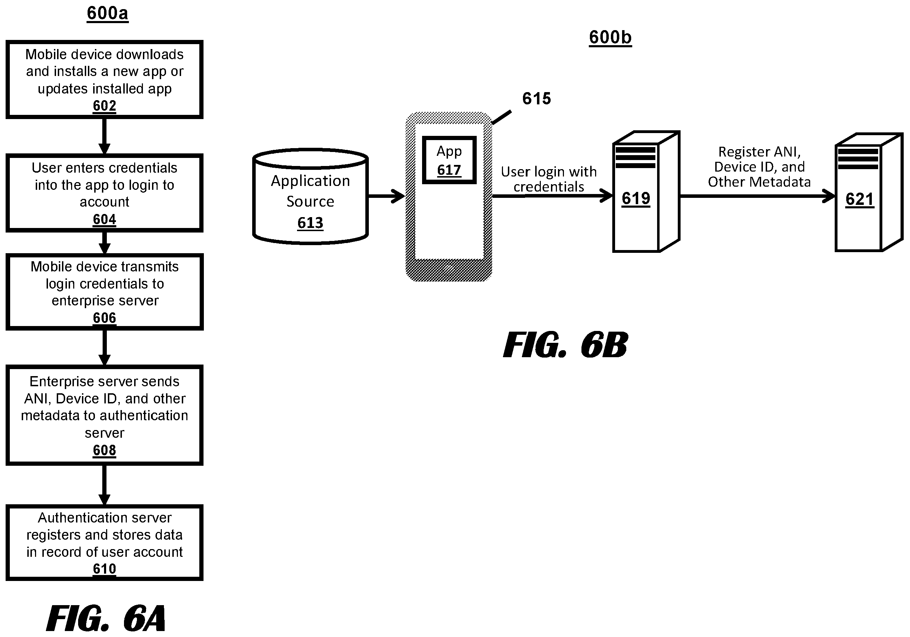

**FIGS. 6A-6B** relate to an illustrative embodiment for enrollment. **FIG. 6A** shows execution steps of an enrollment method **600a** and **FIG. 6B** shows information flow among components of a system **600b** according to the illustrative embodiment. It should be appreciated that embodiments may include additional or alternative steps, or may omit steps, from those shown in **FIG. 6A****,** but still fall within the scope of this disclosure. It may likewise be appreciated that components of the system **600b** may be incorporated or distributed into more or fewer devices from those components shown in **FIG. 6B****.**

In step **602,** a mobile device **615** downloads and installs an application **617** associated with a call center. The downloaded application **617** may be a new installation of the application **617,** a re-installation of the application **617,** or an update to a previously installed instance of the application **617.** The mobile device **615** may download the application **617** from an application source **613.** In some implementations, the application source **613** may be a datastore hosted at an application server or other enterprise server **619** of an enterprise infrastructure; and in some implementations, the application source **613** may be a datastore hosted on a server of a third-party application service (e.g., Apple App Store^{®}, Google Play^{®}).

In step **604,** the user operating the mobile device **615** enters login credentials into the application **617** to access a user account or other service requiring authentication. Non-limiting examples of the credentials may include a password, PIN, biometric data, and private/public keys, among others.

In step **606,** the mobile device **615** transmits the login credentials to an enterprise server **619.** In step **608,** the enterprise server **619** sends one or more ANIs of the mobile device **615,** a device ID of the mobile device **615,** and other types of metadata to an authentication server **621.** In some implementations, these credentials are transferred from the enterprise server **619** to the authentication server **621** along with a device ID (e.g., MAC address, UUID, IDFA, Google AAID), an account ID, and any registered ANIs that may be on file for the account in a database.

An account ID may be any type of data that can be used by a server of the system to query a database, for example, in order to retrieve an authentication score of a call involving the user. Non-limiting examples of the account ID may be a phone number, account number, email address, or some form of a hashed key.

In step **610,** the authentication server **621** registers and stores the authenticating data into a data record for the user account. The data record is stored within a user database, which may be hosted on the authenticating server **621** or other computing device of the enterprise infrastructure.

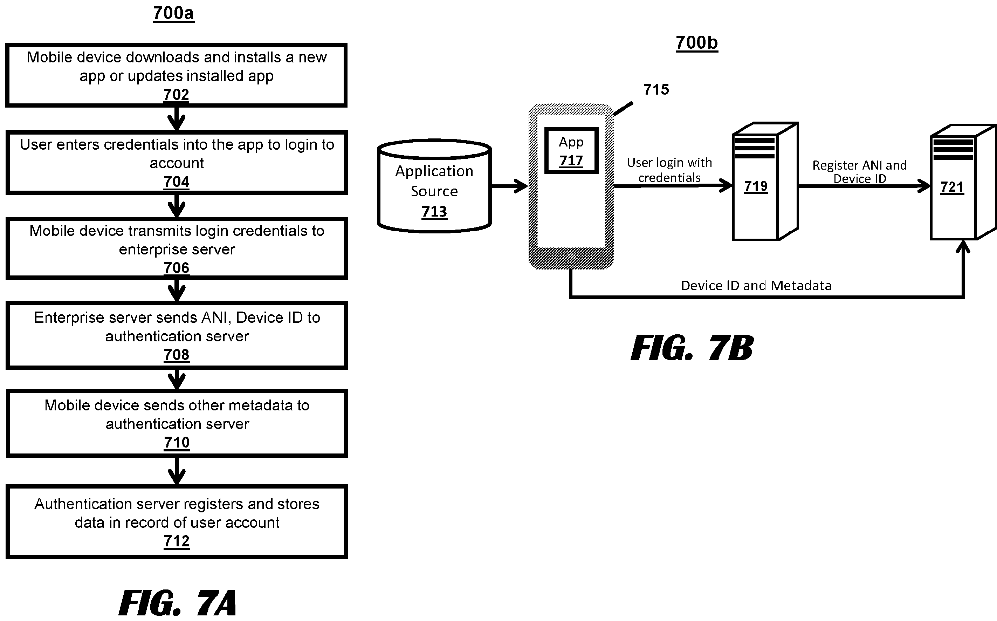

**FIGS. 7A-7B** relate to an illustrative embodiment for enrollment. **FIG. 7A** shows execution steps of a method **700a** enrollment and **FIG. 7B** shows information flow among components of a system **700b** according to the illustrative embodiment. It should be appreciated that embodiments may include additional or alternative steps, or may omit steps, from those shown in **FIG. 7A****,** but still fall within the scope of this disclosure. It may likewise be appreciated that components of the system **700b** may be incorporated or distributed into more or fewer devices from those components shown in **FIG. 7B****.**

In step **702,** a mobile device **715** downloads and installs an application **717** associated with a call center. In step **704** the user operating the mobile device **715** enters login credentials into the application **717** to access a user account or other service requiring authentication. In step **706,** the mobile device **715** transmits the login credentials to an enterprise server **719.** In step **708,** the enterprise server **719** sends ANI and device ID to an authentication server **721.** In step **710,** the mobile device **715** sends other metadata to the authentication server **712.** In step **712,** the authentication server **721** registers and stores data in record of user account.

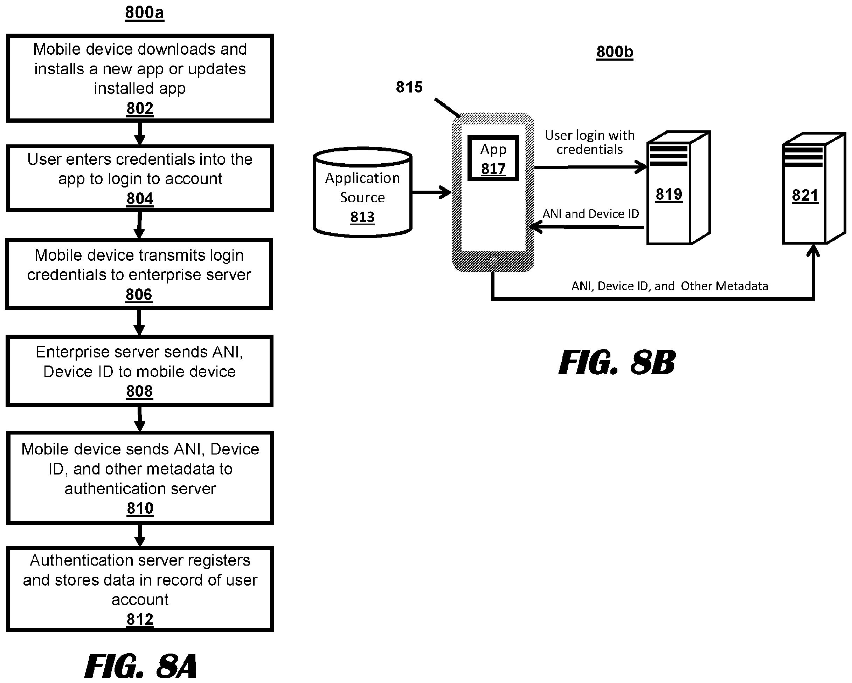

**FIGS. 8A-8B** related to an illustrative embodiment for enrollment. **FIG. 8A** shows execution steps of a method **800a** enrollment and **FIG. 8B** shows information flow among components of a system **800b** according to the illustrative embodiment. It should be appreciated that embodiments may include additional or alternative steps, or may omit steps, from those shown in **FIG. 8A****,** but still fall within the scope of this disclosure. It may likewise be appreciated that components of the system **800b** may be incorporated or distributed into more or fewer devices from those components shown in **FIG. 8B****.**

In step **802,** a mobile device **815** downloads and installs an application **817** associated with a call center. In step **804** the user operating the mobile device **815** enters login credentials into the application **817** to access a user account or other service requiring authentication. In step **806,** the mobile device **815** transmits the login credentials to an enterprise server **819.** In step **808,** the enterprise server **819** sends an ANI and device ID back to the mobile device **815.** In step **810,** the mobile device **815** sends the ANI, the device ID, and other metadata to an authentication server **821.** In step **812,** the authentication server **821** registers and stores the user authenticating data in a user record for the user account.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

The actual software code or specialized control hardware used to implement these systems and methods is not limiting of the invention. Thus, the operation and behavior of the systems and methods were described without reference to the specific software code being understood that software and control hardware can be designed to implement the systems and methods based on the description herein.

When implemented in software, the functions may be stored as one or more instructions or code on a non-transitory computer-readable or processor-readable storage medium. The steps of a method or algorithm disclosed herein may be embodied in a processor-executable software module which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used herein, include compact disc (CD), laser disc, optical disc, digital versatile disc (DVD), floppy disk, and blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the following claims and the principles and novel features disclosed herein.

While various aspects and embodiments have been disclosed, other aspects and embodiments are contemplated. The various aspects and embodiments disclosed are for purposes of illustration and are not intended to be limiting, with the true scope being indicated by the following claims.

## Claims

1. A computer-implemented method comprising:
receiving (202), by a computer via a first communication channel, an indication of an inbound call, the inbound call purportedly originating from a registered caller;
transmitting (206), by the computer, one or more requests to a registered device associated with the registered caller, a first request comprising a message notification configured to display a confirmation element at a graphical user interface of the registered device; and
receiving (208), by the computer via a second communication channel, one or more responses to the one or more requests from the registered device, the one or more responses including a first response to the first request received according to an input to the confirmation element;
generating (210), by the computer, a score to authenticate the inbound call based upon comparing one or more data values of the one or more responses against one or more expected data values associated with the registered device;
executing (210), by the computer, an authentication routine to authenticate the inbound call using the score to authenticate the inbound call;
generating (418), by the computer, a risk score indicating a riskiness of the inbound call using device identification data of the one or more responses from the registered device;
generating (420), by the computer, a final score for the inbound call based upon the score to authenticate the inbound call and the risk score; and
generating (424), by the computer, an authentication approval or denial for the inbound call based upon the final score.

2. The method according to claim 1, wherein the computer receives (312) from the registered device a second response to a second request for a first state of the registered device, and wherein the method further comprises:
identifying (314), by the computer, a second state of the inbound call; and
comparing (314), by the computer, the second state of the inbound call against the first state of the registered device;
and wherein preferably the computer receives from the registered device the second response to the second request for one or more attributes of the registered device, and wherein the method preferably further comprises:
comparing (314), by the computer, the one or more attributes received in the second response against one or more expected attributes associated with the registered device.

3. The method according to claim 1, wherein the computer transmits (206) the first request via the second communication channel, and wherein the first request comprises a push notification to a mobile application of the registered device, or wherein the computer transmits the first request via the first communication channel using a registered phone number for the registered device, and wherein the first request comprises at least one of: a short message service, SMS, message, a multimedia message service, MMS, message, and a rich communication service (RCS) message.

4. The method according to claim 1, wherein the computer receives (202) a caller identifier, caller ID, for the registered caller with the indication of the inbound call, and wherein the method further comprises:
identifying (204), by the computer, in a database a device identifier, device ID, for the registered device associated with the caller ID, wherein the computer transmits (206) the one or more requests to the registered device using the device ID.

5. The method according to claim 1, further comprising:
in response to receiving the inbound call, authenticating (306), by the computer, the inbound call according to an initial authentication routine using a set of user credentials received via the first communication channel.

6. The method according to claim 1, wherein the computer authenticates the inbound call in response to determining that the risk score satisfies a threshold score.

7. The method according to claim 1, further comprising determining, by the computer, whether a device that originated the inbound call has a mobile application associated with a call center system installed.

8. The method according to claim 1, wherein the first request comprises the confirmation element configured to transmit a negative authentication response from the registered device, and wherein the method further comprises:
determining, by the computer, that the first response to the first request received according to the input to the confirmation element is an affirmative response after a predetermined threshold period of time from transmitting the first request.

9. A system (100) comprising:
a database (106) configured to store a plurality of data records associated with a plurality of registered users; and
a computer (104) comprising a processor configured to:
receive, via a first communication channel (112), an indication of an inbound call, the inbound call purportedly originating from a registered caller;
transmit one or more requests to a registered device (109) associated with the registered caller, a first request comprising a message notification configured to display a confirmation element at a graphical user interface of the registered device;
receive, via a second communication channel (114), one or more responses to the one or more requests from the registered device, the one or more responses including a first response to the first request received according to an input to the confirmation element;
generate a score to authenticate the inbound call based upon comparing one or more data values of the one or more responses against one or more expected data values associated with the registered device;
execute an authentication routine to authenticate the inbound call using the score to authenticate the inbound call ;
generate a risk score indicating a riskiness of the inbound call using device identification data of the one or more responses from the registered device ;
generate a final score for the inbound call based upon the score to authenticate the inbound call and the risk score; and
generate an authentication approval or denial for the inbound call based upon the final score.

10. The system according to claim 9, wherein the computer (104) receives from the registered device (109) a second response to a second request for a first state of the registered device, and wherein the computer is further configured to:
identify a second state of the inbound call; and
compare the second state of the inbound call against the first state of the registered device;
and wherein preferably the computer receives from the registered device the second response to the second request for one or more attributes of the registered device, and wherein the computer is preferably configured to:
compare the one or more attributes received in the second response against one or more expected attributes associated with the registered device.

11. The system according to claim 9, wherein the computer (104) is configured to transmit the first request via the second communication channel (114), and wherein the first request comprises a push notification to a mobile application of the registered device (109), or wherein the computer is configured to transmit the first request via the first communication channel (112) using a registered phone number for the registered device, and wherein the first request comprises at least one of: a short message service, SMS, message, a multimedia message service, MMS, message, and a rich communication service, RCS, message..

12. The system according to claim 9, wherein the computer (104) is configured to:
receive a caller identifier, caller ID, for the registered caller with the indication of the inbound call; and
identify in the database (106) a device identifier, device ID, for the registered device associated with the caller ID, wherein the computer transmits the one or more requests to the registered device using the device ID.

13. The system according to claim 9, wherein in response to receiving the inbound call the computer (104) is further configured to authenticate the inbound call according to an initial authentication routine using a set of user credentials received via the first communication channel (112), or wherein the computer is further configured to determine whether a device that originated the inbound call includes a mobile application associated with a call center system.

14. The system according to claim 9, wherein the computer authenticates the inbound call in response to determining that the risk score satisfies a threshold score.

15. The system according to claim 9, wherein the first request comprises the confirmation element configured to transmit a negative authentication response from the registered device (109), and wherein the computer (104) is configured to determine that the first response is an affirmative response after a predetermined threshold period of time from transmitting the first request.

## Patentansprüche

1. Ein computerimplementiertes Verfahren, das Folgendes beinhaltet:
Empfangen (202), durch einen Computer über einen ersten Kommunikationskanal, einer Anzeige eines eingehenden Anrufs, wobei der eingehende Anruf angeblich von einem registrierten Anrufer stammt;
Übertragen (206), durch den Computer, einer oder mehrerer Anforderungen an eine registrierte Vorrichtung, die mit dem registrierten Anrufer assoziiert ist, wobei eine erste Anforderung eine Nachrichtenbenachrichtigung beinhaltet, die konfiguriert ist, um ein Bestätigungselement auf einer grafischen Benutzeroberfläche der registrierten Vorrichtung anzuzeigen; und
Empfangen (208), durch den Computer über einen zweiten Kommunikationskanal, einer oder mehrerer Antworten auf die eine oder die mehreren Anforderungen von der registrierten Vorrichtung, wobei die eine oder die mehreren Antworten eine erste Antwort auf die erste Anforderung umfassen, die gemäß einer Eingabe in das Bestätigungselement empfangen wird;
Erzeugen (210), durch den Computer, einer Bewertung zum Authentifizieren des eingehenden Anrufs basierend auf dem Vergleichen eines oder mehrerer Datenwerte der einen oder der mehreren Antworten mit einem oder mehreren erwarteten Datenwerten, die mit der registrierten Vorrichtung assoziiert sind;
Ausführen (210), durch den Computer, einer Authentifizierungsroutine zum Authentifizieren des eingehenden Anrufs unter Verwendung der Bewertung zum Authentifizieren des eingehenden Anrufs;
Erzeugen (418), durch den Computer, einer Risikobewertung, die ein Risiko des eingehenden Anrufs anzeigt, unter Verwendung von Vorrichtungsidentifikationsdaten der einen oder der mehreren Antworten von der registrierten Vorrichtung;
Erzeugen (420), durch den Computer, einer endgültigen Bewertung für den eingehenden Anruf basierend auf der Bewertung zum Authentifizieren des eingehenden Anrufs und der Risikobewertung; und
Erzeugen (424), durch den Computer, einer Authentifizierungsgenehmigung oder ₋verweigerung für den eingehenden Anruf basierend auf der endgültigen Bewertung.

2. Verfahren gemäß Anspruch 1, wobei der Computer von der registrierten Vorrichtung eine zweite Antwort auf eine zweite Anforderung für einen ersten Zustand der registrierten Vorrichtung empfängt (312) und wobei das Verfahren ferner Folgendes beinhaltet:
Identifizieren (314), durch den Computer, eines zweiten Zustands des eingehenden Anrufs; und
Vergleichen (314), durch den Computer, des zweiten Zustands des eingehenden Anrufs mit dem ersten Zustand der registrierten Vorrichtung;
und wobei der Computer vorzugsweise von der registrierten Vorrichtung die zweite Antwort auf die zweite Anforderung für ein oder mehrere Attribute der registrierten Vorrichtung empfängt und wobei das Verfahren vorzugsweise ferner Folgendes beinhaltet:
Vergleichen (314), durch den Computer, des einen oder der mehreren Attribute, die in der zweiten Antwort empfangen werden, mit einem oder mehreren erwarteten Attributen, die mit der registrierten Vorrichtung assoziiert sind.

3. Verfahren gemäß Anspruch 1, wobei der Computer die erste Anforderung über den zweiten Kommunikationskanal überträgt (206) und wobei die erste Anforderung eine Push-Benachrichtigung an eine mobile Anwendung der registrierten Vorrichtung beinhaltet oder wobei der Computer die erste Anforderung über den ersten Kommunikationskanal unter Verwendung einer registrierten Telefonnummer für die registrierte Vorrichtung überträgt und wobei die erste Anforderung mindestens eines von Folgendem beinhaltet: eine Kurznachrichtendienst-Nachricht, SMS-Nachricht, eine Multimedianachrichtendienst-Nachricht, MMS-Nachricht, und eine Rich-Communication-Service(RCS)-Nachricht.

4. Verfahren gemäß Anspruch 1, wobei der Computer eine Anruferkennung, Anrufer-ID, für den registrierten Anrufer mit der Anzeige des eingehenden Anrufs empfängt (202) und wobei das Verfahren ferner Folgendes beinhaltet:
Identifizieren (204), durch den Computer, in einer Datenbank, einer Vorrichtungskennung, Vorrichtungs-ID, für die registrierte Vorrichtung, die mit der Anrufer-ID assoziiert ist, wobei der Computer die eine oder die mehreren Anforderungen an die registrierte Vorrichtung unter Verwendung der Vorrichtungs-ID überträgt (206).

5. Verfahren gemäß Anspruch 1, das ferner Folgendes beinhaltet:
als Reaktion auf das Empfangen des eingehenden Anrufs, Authentifizieren (306), durch den Computer, des eingehenden Anrufs gemäß einer anfänglichen Authentifizierungsroutine unter Verwendung eines Satzes von Benutzeranmeldeinformationen, die über den ersten Kommunikationskanal empfangen werden.

6. Verfahren gemäß Anspruch 1, wobei der Computer den eingehenden Anruf als Reaktion auf das Bestimmen, dass die Risikobewertung eine Schwellenwertbewertung erfüllt, authentifiziert.

7. Verfahren gemäß Anspruch 1, das ferner das Bestimmen, durch den Computer, ob eine Vorrichtung, von der der eingehende Anruf stammt, eine mobile Anwendung, die mit einem Call-Center-System assoziiert ist, installiert hat, beinhaltet.

8. Verfahren gemäß Anspruch 1, wobei die erste Anforderung ein Bestätigungselement beinhaltet, das konfiguriert ist, um eine negative Authentifizierungsantwort von der registrierten Vorrichtung zu übertragen, und wobei das Verfahren ferner Folgendes beinhaltet:
Bestimmen, durch den Computer, dass die erste Antwort auf die erste Anforderung, die gemäß der Eingabe in das Bestätigungselement empfangen wird, eine positive Antwort nach einem vorbestimmten Schwellenwertzeitraum ab dem Übertragen der ersten Anforderung ist.

9. Ein System (100), das Folgendes beinhaltet:
eine Datenbank (106), die konfiguriert ist, um eine Vielzahl von Datensätzen zu speichern, die mit einer Vielzahl von registrierten Benutzern assoziiert sind; und
einen Computer (104), der einen Prozessor beinhaltet, der für Folgendes konfiguriert ist:
Empfangen, über einen ersten Kommunikationskanal (112), einer Anzeige eines eingehenden Anrufs, wobei der eingehende Anruf angeblich von einem registrierten Anrufer stammt;
Übertragen einer oder mehrerer Anforderungen an eine registrierte Vorrichtung (109), die mit dem registrierten Anrufer assoziiert ist, wobei eine erste Anforderung eine Nachrichtenbenachrichtigung beinhaltet, die konfiguriert ist, um ein Bestätigungselement auf einer grafischen Benutzeroberfläche der registrierten Vorrichtung anzuzeigen;
Empfangen, über einen zweiten Kommunikationskanal (114), einer oder mehrerer Antworten auf die eine oder die mehreren Anforderungen von der registrierten Vorrichtung, wobei die eine oder die mehreren Antworten eine erste Antwort auf die erste Anforderung umfassen, die gemäß einer Eingabe in das Bestätigungselement empfangen wird;
Erzeugen einer Bewertung zum Authentifizieren des eingehenden Anrufs basierend auf dem Vergleichen eines oder mehrerer Datenwerte der einen oder der mehreren Antworten mit einem oder mehreren erwarteten Datenwerten, die mit der registrierten Vorrichtung assoziiert sind;
Ausführen einer Authentifizierungsroutine zum Authentifizieren des eingehenden Anrufs unter Verwendung der Bewertung zum Authentifizieren des eingehenden Anrufs;
Erzeugen einer Risikobewertung, die ein Risiko des eingehenden Anrufs anzeigt, unter Verwendung von Vorrichtungsidentifikationsdaten der einen oder der mehreren Antworten von der registrierten Vorrichtung;
Erzeugen einer endgültigen Bewertung für den eingehenden Anruf basierend auf der Bewertung zum Authentifizieren des eingehenden Anrufs und der Risikobewertung; und
Erzeugen einer Authentifizierungsgenehmigung oder -verweigerung für den eingehenden Anruf basierend auf der endgültigen Bewertung.

10. System gemäß Anspruch 9, wobei der Computer (104) von der registrierten Vorrichtung (109) eine zweite Antwort auf eine zweite Anforderung für einen ersten Zustand der registrierten Vorrichtung empfängt und wobei der Computer ferner für Folgendes konfiguriert ist:
Identifizieren eines zweiten Zustands des eingehenden Anrufs; und
Vergleichen des zweiten Zustands des eingehenden Anrufs mit dem ersten Zustand der registrierten Vorrichtung;
und wobei der Computer vorzugsweise von der registrierten Vorrichtung die zweite Antwort auf die zweite Anforderung für ein oder mehrere Attribute der registrierten Vorrichtung empfängt und wobei der Computer vorzugsweise für Folgendes konfiguriert ist:
Vergleichen des einen oder der mehreren Attribute, die in der zweiten Antwort empfangen werden, mit einem oder mehreren erwarteten Attributen, die mit der registrierten Vorrichtung assoziiert sind.

11. System gemäß Anspruch 9, wobei der Computer (104) konfiguriert ist, um die erste Anforderung über den zweiten Kommunikationskanal (114) zu übertragen, und wobei die erste Anforderung eine Push-Benachrichtigung an eine mobile Anwendung der registrierten Vorrichtung (109) beinhaltet oder wobei der Computer konfiguriert ist, um die erste Anforderung über den ersten Kommunikationskanal (112) unter Verwendung einer registrierten Telefonnummer für die registrierte Vorrichtung zu übertragen und wobei die erste Anforderung mindestens eines von Folgendem beinhaltet: eine Kurznachrichtendienst-Nachricht, SMS-Nachricht, eine Multimedianachrichtendienst-Nachricht, MMS-Nachricht, und eine Rich-Communication-Service(RCS)-Nachricht.

12. System gemäß Anspruch 9, wobei der Computer (104) für Folgendes konfiguriert ist:
Empfangen einer Anruferkennung, Anrufer-ID, für den registrierten Anrufer mit der Anzeige des eingehenden Anrufs; und
Identifizieren, in der Datenbank (106), einer Vorrichtungskennung, Vorrichtungs-ID, für die registrierte Vorrichtung, die mit der Anrufer-ID assoziiert ist, wobei der Computer die eine oder die mehreren Anforderungen an die registrierte Vorrichtung unter Verwendung der Vorrichtungs-ID überträgt.

13. System gemäß Anspruch 9, wobei als Reaktion auf das Empfangen des eingehenden Anrufs der Computer (104) ferner konfiguriert ist, um den eingehenden Anruf gemäß einer anfänglichen Authentifizierungsroutine unter Verwendung eines Satzes von Benutzeranmeldeinformationen, die über den ersten Kommunikationskanal (112) empfangen werden, zu authentifizieren, oder wobei der Computer ferner konfiguriert ist, um zu bestimmen, ob eine Vorrichtung, von der der eingehende Anruf stammt, eine mobile Anwendung, die mit einem Call-Center-System assoziiert ist, umfasst.

14. System gemäß Anspruch 9, wobei der Computer den eingehenden Anruf als Reaktion auf das Bestimmen, dass die Risikobewertung eine Schwellenwertbewertung erfüllt, authentifiziert.

15. System gemäß Anspruch 9, wobei die erste Anforderung das Bestätigungselement beinhaltet, das konfiguriert ist, um eine negative Authentifizierungsantwort von der registrierten Vorrichtung (109) zu übertragen, und wobei der Computer (104) konfiguriert ist, um zu bestimmen, dass die erste Antwort eine positive Antwort nach einem vorbestimmten Schwellenwertzeitraum ab dem Übertragen der ersten Anforderung ist.

## Revendications

1. Un procédé mis en œuvre par ordinateur comprenant :
la réception (202), par un ordinateur via un premier canal de communication, d'une indication d'un appel entrant, l'appel entrant émanant prétendument d'un appelant enregistré ;
la transmission (206), par l'ordinateur, d'une ou de plusieurs demandes à un dispositif enregistré associé à l'appelant enregistré, une première demande comprenant une notification de message configurée pour afficher un élément de confirmation au niveau d'une interface utilisateur graphique du dispositif enregistré ; et
la réception (208), par l'ordinateur via un deuxième canal de communication, d'une ou de plusieurs réponses aux une ou plusieurs demandes en provenance du dispositif enregistré, les une ou plusieurs réponses incluant une première réponse à la première demande reçue conformément à une entrée dans l'élément de confirmation ;
la génération (210), par l'ordinateur, d'un score pour authentifier l'appel entrant sur la base de la comparaison d'une ou de plusieurs valeurs de données des une ou plusieurs réponses à une ou plusieurs valeurs de données attendues associées au dispositif enregistré ;
l'exécution (210), par l'ordinateur, d'une routine d'authentification pour authentifier l'appel entrant à l'aide du score pour authentifier l'appel entrant ;
la génération (418), par l'ordinateur, d'un score de risque indiquant un degré de risque de l'appel entrant à l'aide de données d'identification de dispositif des une ou plusieurs réponses en provenance du dispositif enregistré ;
la génération (420), par l'ordinateur, d'un score final pour l'appel entrant sur la base du score pour authentifier l'appel entrant et du score de risque ; et
la génération (424), par l'ordinateur, d'une approbation ou d'un refus d'authentification pour l'appel entrant sur la base du score final.

2. Le procédé conformément à la revendication 1, où l'ordinateur reçoit (312) en provenance du dispositif enregistré une deuxième réponse à une deuxième demande pour un premier état du dispositif enregistré, et où le procédé comprend en outre :
l'identification (314), par l'ordinateur, d'un deuxième état de l'appel entrant ; et
la comparaison (314), par l'ordinateur, du deuxième état de l'appel entrant au premier état du dispositif enregistré ;
et où préférablement l'ordinateur reçoit en provenance du dispositif enregistré la deuxième réponse à la deuxième demande pour un ou plusieurs attributs du dispositif enregistré, et où le procédé comprend en outre préférablement :
la comparaison (314), par l'ordinateur, des un ou plusieurs attributs reçus dans la deuxième réponse à un ou plusieurs attributs attendus associés au dispositif enregistré.

3. Le procédé conformément à la revendication 1, où l'ordinateur transmet (206) la première demande via le deuxième canal de communication, et où la première demande comprend une notification poussée à une application mobile du dispositif enregistré, ou bien où l'ordinateur transmet la première demande via le premier canal de communication à l'aide d'un numéro de téléphone enregistré pour le dispositif enregistré, et où la première demande comprend au moins un message parmi : un message SMS (*Short Message Service,* service de messages courts), un message MMS (*Multimedia Message Service*, service de messages multimédias), et un message RCS (*Rich Communication Service,* service de communication enrichie).

4. Le procédé conformément à la revendication 1, où l'ordinateur reçoit (202) un identifiant d'appelant, ID appelant, pour l'appelant enregistré avec l'indication de l'appel entrant, et où le procédé comprend en outre :
l'identification (204), par l'ordinateur, dans une base de données d'un identifiant de dispositif, ID dispositif, pour le dispositif enregistré associé à l'ID appelant, où l'ordinateur transmet (206) les une ou plusieurs demandes au dispositif enregistré à l'aide de l'ID dispositif.

5. Le procédé conformément à la revendication 1, comprenant en outre :
en réponse à la réception de l'appel entrant, l'authentification (306), par l'ordinateur, de l'appel entrant conformément à une routine d'authentification initiale à l'aide d'un ensemble de justificatifs d'identité d'utilisateur reçus via le premier canal de communication.

6. Le procédé conformément à la revendication 1, où l'ordinateur authentifie l'appel entrant en réponse à la détermination que le score de risque satisfait un score seuil.

7. Le procédé conformément à la revendication 1, comprenant en outre la détermination, par l'ordinateur, qu'un dispositif dont a émané l'appel entrant a ou non une application mobile associée à un système de centre d'appels installée.

8. Le procédé conformément à la revendication 1, où la première demande comprend l'élément de confirmation configuré pour transmettre une réponse d'authentification négative en provenance du dispositif enregistré, et où le procédé comprend en outre :
la détermination, par l'ordinateur, que la première réponse à la première demande reçue conformément à l'entrée dans l'élément de confirmation est une réponse affirmative après un laps de temps seuil prédéterminé à partir de la transmission de la première demande.

9. Un système (100) comprenant :
une base de données (106) configurée pour stocker une pluralité d'enregistrements de données associés à une pluralité d'utilisateurs enregistrés ; et
un ordinateur (104) comprenant un processeur configuré pour :
recevoir, via un premier canal de communication (112), une indication d'un appel entrant, l'appel entrant émanant prétendument d'un appelant enregistré ;
transmettre une ou plusieurs demandes à un dispositif enregistré (109) associé à l'appelant enregistré, une première demande comprenant une notification de message configurée pour afficher un élément de confirmation au niveau d'une interface utilisateur graphique du dispositif enregistré ;
recevoir, via un deuxième canal de communication (114), une ou plusieurs réponses aux une ou plusieurs demandes en provenance du dispositif enregistré, les une ou plusieurs réponses incluant une première réponse à la première demande reçue conformément à une entrée dans l'élément de confirmation ;
générer un score pour authentifier l'appel entrant sur la base de la comparaison d'une ou de plusieurs valeurs de données des une ou plusieurs réponses à une ou plusieurs valeurs de données attendues associées au dispositif enregistré ;
exécuter une routine d'authentification pour authentifier l'appel entrant à l'aide du score pour authentifier l'appel entrant ;
générer un score de risque indiquant un degré de risque de l'appel entrant à l'aide de données d'identification de dispositif des une ou plusieurs réponses en provenance du dispositif enregistré ;
générer un score final pour l'appel entrant sur la base du score pour authentifier l'appel entrant et du score de risque ; et
générer une approbation ou un refus d'authentification pour l'appel entrant sur la base du score final.

10. Le système conformément à la revendication 9, où l'ordinateur (104) reçoit en provenance du dispositif enregistré (109) une deuxième réponse à une deuxième demande pour un premier état du dispositif enregistré, et où l'ordinateur est en outre configuré pour :
identifier un deuxième état de l'appel entrant ; et
comparer le deuxième état de l'appel entrant au premier état du dispositif enregistré ;
et où préférablement l'ordinateur reçoit en provenance du dispositif enregistré la deuxième réponse à la deuxième demande pour un ou plusieurs attributs du dispositif enregistré, et où l'ordinateur est préférablement configuré pour :
comparer les un ou plusieurs attributs reçus dans la deuxième réponse à un ou plusieurs attributs attendus associés au dispositif enregistré.

11. Le système conformément à la revendication 9, où l'ordinateur (104) est configuré pour transmettre la première demande via le deuxième canal de communication (114), et où la première demande comprend une notification poussée à une application mobile du dispositif enregistré (109), ou bien où l'ordinateur est configuré pour transmettre la première demande via le premier canal de communication (112) à l'aide d'un numéro de téléphone enregistré pour le dispositif enregistré, et où la première demande comprend au moins un message parmi : un message SMS (*Short Message Service*), un message MMS (*Multimedia Message Service*), et un message RCS (*Rich Communication Service*).

12. Le système conformément à la revendication 9, où l'ordinateur (104) est configuré pour :
recevoir un identifiant d'appelant, ID appelant, pour l'appelant enregistré avec l'indication de l'appel entrant ; et
identifier dans la base de données (106) un identifiant de dispositif, ID dispositif, pour le dispositif enregistré associé à l'ID appelant, où l'ordinateur transmet les une ou plusieurs demandes au dispositif enregistré à l'aide de l'ID dispositif.

13. Le système conformément à la revendication 9, où en réponse à la réception de l'appel entrant, l'ordinateur (104) est en outre configuré pour authentifier l'appel entrant conformément à une routine d'authentification initiale à l'aide d'un ensemble de justificatifs d'identité d'utilisateur reçus via le premier canal de communication (112), ou bien où l'ordinateur est en outre configuré pour déterminer qu'un dispositif dont a émané l'appel entrant inclut ou non une application mobile associée à un système de centre d'appels.

14. Le système conformément à la revendication 9, où l'ordinateur authentifie l'appel entrant en réponse à la détermination que le score de risque satisfait un score seuil.

15. Le système conformément à la revendication 9, où la première demande comprend l'élément de confirmation configuré pour transmettre une réponse d'authentification négative en provenance du dispositif enregistré (109), et où l'ordinateur (104) est configuré pour déterminer que la première réponse est une réponse affirmative après un laps de temps seuil prédéterminé à partir de la transmission de la première demande.
